## Europäisches Patentamt

## European Patent Office

## Office européen des brevets

(19)

(11) Veröffentlichungsnummer: **0 244 574**
**B1**

(12) **EUROPÄISCHE PATENTSCHRIFT**

(45) Veröffentlichungstag der Patentschrift: **27.12.90**

(21) Anmeldenummer: **87102289.3**

(22) Anmeldetag: **18.02.87**

(51) Int. Cl.⁵: **B 23 K 26/08**

(54) **Vorrichtung zum Bearbeiten eines Körpers mit zylindrischer Oberfläche mittels eines Lasers.**

(30) Priorität: **25.04.86 DE 3614082**

(43) Veröffentlichungstag der Anmeldung:
**11.11.87 Patentblatt 87/46**

(45) Bekanntmachung des Hinweises auf die
Patenterteilung:
**27.12.90 Patentblatt 90/52**

(84) Benannte Vertragsstaaten:
**AT BE CH DE ES FR GB GR IT LI LU NL SE**

(56) Entgegenhaltungen:
**EP-A-0 072 609**
**DE-A-2 950 149**

(73) Patentinhaber: **ELCEDE GMBH**
**Otto-Hahn-Strasse 7**
**D-7312 Kirchheim/Teck (DE)**

(72) Erfinder: **Dietterich, Fred, Dipl.-Ing.**
**Hardbühl 13**
**D-7311 Erkenbrechtsweiler (DE)**
Erfinder: **Butenuth, Dieter, Dipl.-Ing.**
**Rechbergweg 4**
**D-7311 Dettingen (DE)**

(74) Vertreter: **Patentanwälte Phys. Bartels Dipl.-Ing.**
**Fink Dr.-Ing. Held**
**Lange Strasse 51**
**D-7000 Stuttgart 1 (DE)**

Courier Press, Leamington Spa, England.

**Beschreibung**

Die Erfindung betrifft eine Vorrichtung mit den im Oberbegriff des Patentanspruches 1 genannten Merkmalen zum Bearbeiten eines Körpers mit kreiszylindrischer Außenfläche mittels eines Lasers.

Eine Vorrichtung dieser Art zum Schneiden von Stanzformschnittfugen für Bandstahlschnittwerkzeuge ist durch die DE-A1-2 950 149 bekannt.

Der Erfindung liegt die Aufgabe zugrunde, eine Vorrichtung mit den im Oberbegriff des Anspruches 1 genannten Merkmalen zu schaffen, deren Handhabung gegenüber dem Bekannten wesentlich vereinfacht ist.

Diese Aufgabe ist bei einer Vorrichtung mit den im Anspruch 1 genannten Merkmalen gelöst. Dadurch, daß in jedem Lagerbock eine Lagerwelle drehbar gelagert ist, können die Enden der Trägerwelle mit den einander zugekehrten Enden der Lagerwellen koaxial verbunden werden. Dies hat den Vorteil, daß für die Befestigung von schalenförmigen Körpern mit kreiszylindrischen Außenflächen, deren Oberfläche bearbeitet werden soll, die Trägerwelle von der Vorrichtung leicht abgenommen werden kann. Hierbei wird durch die Verbindung der Enden der Trägerwelle mit den einander zugekehrten Enden der Lagerwellen ein Drehantrieb nur für die eine Lagerwelle benötigt.

Dadurch, daß als Steuerung eine inkrementale Längenmeßeinrichtung für die Bewegung des Lasers, eine inkrementale Winkelmeßeinrichtung für die Drehbewegung der Trägerwelle und ein Rechner vorhanden sind, kann der Linearantrieb und der Drehantrieb in Abhängigkeit von Meßwerten der Längen- und Winkelmeßeinrichtungen durch den Rechner gesteuert werden.

Durch die vorteilhafte Ausbildung gemäß dem Anspruch 2 wird erreicht, daß der Abstand der Drehachse von der Führung des Lasers in der Stelleinrichtung verstellbar ist. Dadurch können durch entsprechende Programmierung des Rechners beliebig gerichtete linienförmige Einschnitte in nach beliebig großen Radien gebogenen schalenförmigen Körpern mit konstanter Relativgeschwindigkeit hergestellt werden.

Nach einer weiteren vorteilhaften Ausführungsform kann vorgesehen sein, daß die Trägerwelle zur Lagerung von schalenförmigen Körpern zwei Lagerräder aufweist. Die schalenförmigen, zu bearbeitenden Körper können hierbei auf den Felgen der Lagerräder befestigt, z.B. an diesen angeschraubt werden. Dabai wird von den schalenförmigen Körpern ein Zwischenraum zwischen diesen und der Trägerwelle eingeschlossen. Dieser Zwischenraum kann bei weiteren vorteilhaften Ausführungsformen dazu ausgenutzt werden, daß die beim Ausbrennen der Einschnitte in z.B. Sperrholz entstehenden Rauchgase durch diesen Zwischenraum abgesaugt werden.

Dies wird bei einer vorteilhaften Ausführungsform dadurch erreicht, daß die Trägerwelle mindestens an ihrem Abtriebsende und die Lagerwelle hohl sind und daß der Hohlraum der Trägerwelle durch radiale Öffnungen mit dem Außenraum, also mit dem genannten Zwischenraum, verbunden ist. Schließt man dann an das freie Ende der Lagerwelle am Abtriebsende der Trägerwelle einen Saugschlauch an, dann werden dadurch die beim Einschneiden entstehenden Rauchgase gleich in den Zwischenraum und durch diesen durch die Hohlräume der Trägerwelle und der Lagerwelle abgesaugt.

Die Erfindung ist in der folgenden Beschreibung von in der Zeichnung dargestellten Ausführungsbeispielen im einzelnen erläutert.

Es zeigen:

Fig. 1 eine teilweise im Schnitt dargestellte Seitenansicht eines Ausführungsbeispiels;

Fig. 2 eine Ansicht in Richtung des Pfeiles II in Fig. 1;

Fig. 3 einen vergrößert dargestellten Schnitt nach der Linie III-III in Fig. 1;

Fig. 4 eine Seitenansicht der in Fig. 3 im Schnitt dargestellten Verbindung der Wellenenden;

Fig. 5 einen vergrößerten Ausschnitt der Verbindung des Abtriebsendes der Trägerwelle mit der in Fig. 1 rechten Lagerwelle;

Fig. 6 ein abgewandeltes Ausführungsbeispiel der Verbindung von zwei Wellenenden für die Vorrichtung nach Fig 1.

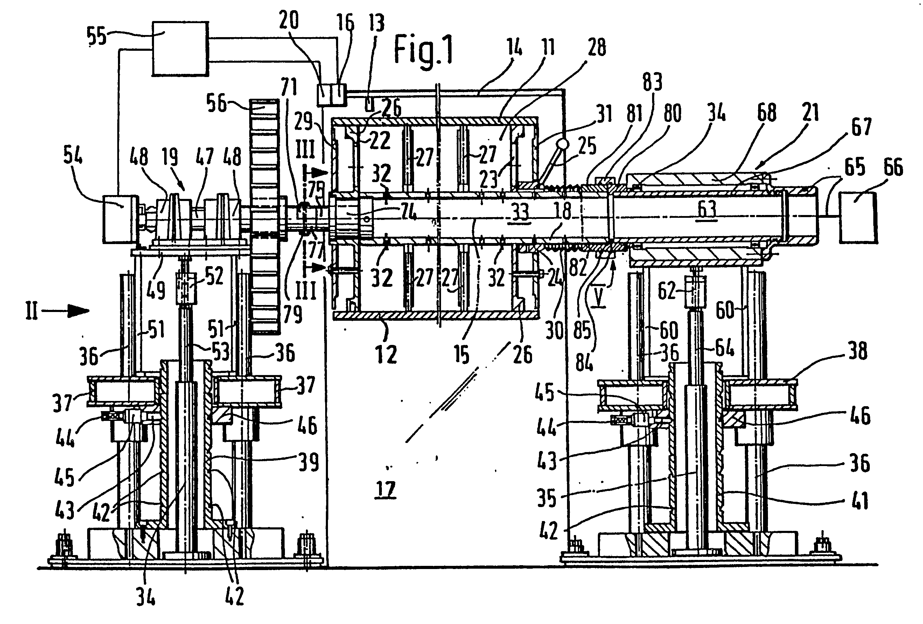

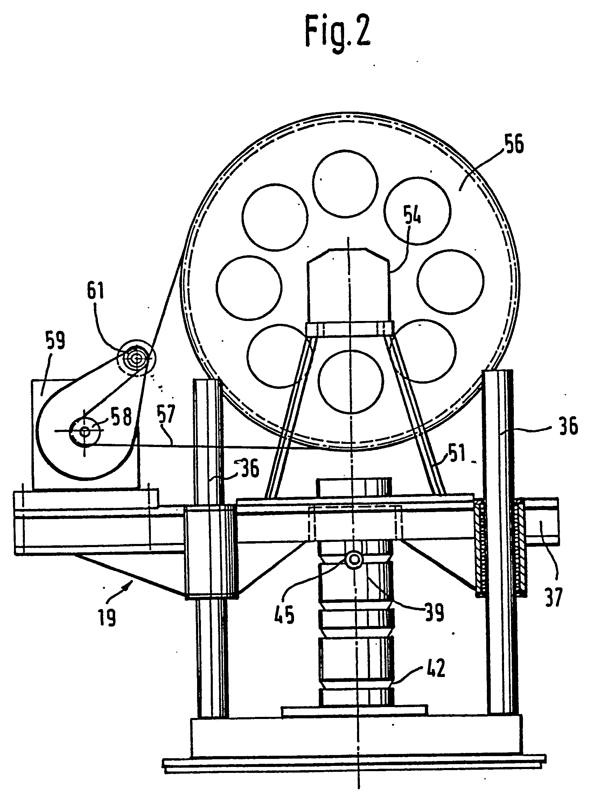

Die in den Fig. 1 bis 5 dargestellte Vorrichtung dient zum Herstellen von durchgehenden Einschnitten in zwei kreiszylindrische Halbschalen 11 und 12 mittels eines Lasers 13, der längs einer Führung 14 parallel zur Achse 15 der Halbschalen 11 und 12 vertikal über dieser geführt und über eine in der Zeichnung nicht dargestellte Spindel von einem Motor 16 bewegbar ist. Die Führung 14 und der Motor 16 werden von einem hinter der Vorrichtung angeordneten Ständer 17 getragen.

Die Halbschalen 11 und 12 bestehen aus Sperrholz. Durch den Strahl des Lasers 13 werden in die Halbschalen die durchgehenden Einschnitte ausgebrannt, die zur Aufnahme von Messern dienen. Diese Halbschalen 11 und 12 werden dann auf einer Walze befestigt. Diese Walze wirkt dann mit einer Gegenwalze zusammen, so daß aus Kartonbögen, die durch den Walzenspalt hindurchgeführt werden, im Durchlauf Kartonzuschnitte ausgeschnitten werden. Die ausgebrannten Einschnitte können auch dazu verwendet werden, daß außer den Messern auch Werkzeuge zum Einprägen von Rillen eingesetzt werden, so daß im Rotationsverfahren die ausgeschnittenen oder ausgestanzten Kartonzuschnitte gleichzeitig mit Faltrillen versehen werden.

Um diese Einschnitte in die Halbschalen 11 und 12 möglichst schnell und einfach erzeugen zu können, ist unter der Führung 14 des Lasers 13 eine hohle Trägerwelle 18 zwischen zwei in Fig. 1 als Ganzes mit 19 und 21 bezeichneten Lagerböcken gelagert. Zum Befestigen der Lagerschalen 11 und 12 sind in der Nähe der beiden Enden der Trägerwelle 18 zwei Lagerräder 22 und 23 befestigt, von denen das eine Lagerrad 23 axial verschiebbar und auf der Trägerwelle 18 mittels einer Klemmvorrichtung 24 festklemmbar ist, die durch Handgriffe 25, von denen in der Zeichnung nur einer dargestellt ist, betätigbar ist. Es handelt sich hierbei um eine bekannte, einen einschraubbaren Kegelstumpf benutzende Klemmvorrichtung, die daher im einzelnen weder dargestellt noch beschrieben ist. Jedes Lagerrad 22 und 23 ist mit einer felgenartigen Verbreiterung 26 versehen, die mit radialen Hohlgewinden versehen ist, die zur Aufnehme von Befestigungsschrauben dienen, mittels deren die Schalen 11 und 12 an den Rädern 22 und 23 befestigt werden können.

Außerdem sind zwischen den Rädern 22 und 23 noch Speichen 27 vorgesehen, die ebenfalls dazu dienen, die Schalen 11 und 12 mit der Trägerwelle 18 durch Schrauben zu verbinden.

Um den ringförmigen Zwischenraum 28 zwischen den Helbschalen 11 und 12 und der Trägarwelle 18 nach außen ebzuschließen, sind außerhalb der zur Verringerung der Trägheitsmasse mit Löchern versehenen Lagerräder 22 und 23 Deckscheiben 29 und 31 vorgesehen.

Die Trägerwelle 18 hat radiale Bohrungen 32, die den Zwischenraum 28 mit dem Hohlraum 33 der Trägerwelle verbinden.

Das mit der benachbarten Deckscheibe 31 verbundene und axiel verschiebbare Lagerrad 23 ist mit dem benachbarten Ende der Trägerwelle 18 mit einem die Trägerwelle 18 umfessenden Faltenbalg 30 verbunden, der dazu dient, die beim Verschieben des Lagerrades nicht mehr in den Zwischenraum 28 mündenden Radialbohrungen 32 mit diesem zu verbinden.

Jeder dar beiden Lagerböcke 19 und 21 ist mittels eines hydraulischen Zylinders 34 bzw. 35 auf und ab bewegbar und weist zu diesem Zweck einen in vier vertikalen Säulen 36 geführten Rahmen 37 bzw. 38 auf.

Koaxial zu den Zylindern 34 und 35 ist eine Rastensäule 39 bzw. 41 angeordnet, die an ihrem Außenumfang mit Rastaussparungen 42 versehen ist, in die ein Riegel 43 in seiner Riegelstellung eingreift, aus der er beim Heben des Lagerbockes 19 bzw. 21 durch entsprechend geneigte Begrenzungsflächen der Rastaussparung gegen die Kraft einer Feder 44 in eine Entriegelungsstellung herausgedrückt und in dieser durch einen Elektromagneten 45 gehalten wird. Die durch den Riegel 43, die Feder 44 und den Elektromagneten 45 gebildete Riegelvorrichtung ist in einem am Rahmen 37 bzw. 38 befestigten, die Rastensäule 39 bzw. 41 umfassenden Ring 46 angeordnet.

Die Rahmen 37 und 38 der Lagerböcke 19 und 21 tragen Drehlagerungen für die Trägerwelle 18. Die Drehlagerung des Lagerbockes 19 weist eine Lagerwelle 47 auf, die in Lagern 48 drehbar und axial nicht verschiebbar gelagert ist. Die Lager 48 sind auf einer Plattform 49 angeordnet, die mittels eines Gestänges 51 mit dem Rahmen 37 und mittels einer Stellvorrichtung 52 mit der Kolbenstange 53 des hydraulischen Zylinders 34 verbunden. Die Stellvorrichtung 52 dient dazu, die Laege der Plattform gegenüber der Kolbenstange 53 genau justieren zu können. An der Plattform 49 ist eine inkrementale Winkelmeßeinrichtung 54 befestigt, die den Drehwinkel der Lagerwelle 47 mißt, deren Ausgang mit einem Rechner 55 verbunden ist, der auch mit dem Ausgang einer inkrementalen Längenmeßeinrichtung 20 verbunden ist, die dem Rechner die Position des Lasers 13 angibt.

Auf der Lagerwelle 47 ist ein Zahnrad 56 befestigt, das für dan Antrieb durch einen in Fig. 1 weggelassenen Zahnriemen 57 dient, der vom Ritzel 58 eines Motors 59 antreibbar ist. Zum Spannen des Zahnriemens 57 ist eine Spannrolle 61 vorgesehen. Der Motor 59 ist zur Aufnahme von Steuersignalen, ebenso wie der Antriebsmotor des Lasers 13, mit dem Rechner 55 verbunden.

Ähnlich wie die Kolbenstenge 53 des Zylinders 34 mit der Plattform 49 des Lagerbockes 19 ist die Kolbenstange 64 des Zylinders 35 über eine Stellvorrichtung 62 mit einem Lager 68 verbunden, das mit dem Rahmen 38 durch ein Gestell 60 verbunden ist und in dem eine hohle Lagerwelle 67 drehbar und axial unverschiebbar gelagert ist. Die Lagerwelle 67 hat den gleichen Durchmesser wie die Trägerwelle 18. Ihr von der Trägerwelle 18 abgekehrtes Ende ist über einen in der Zeichnung nur schematisch angedeuteten Saugschlauch 65 mit einer Absaugvorrichtung 66 verbunden, mittels deren aus dem Zwischenraum 28 beim Einechneiden von durchgehenden Einschnitten in die Halbschalen 11 und 12 entstehende Rauchgase durch die radialen Bohrungen 32, die Hohlräume 33 und 63 der Trägerwelle 18 bzw. Lagerwelle 67 abgesaugt werden können.

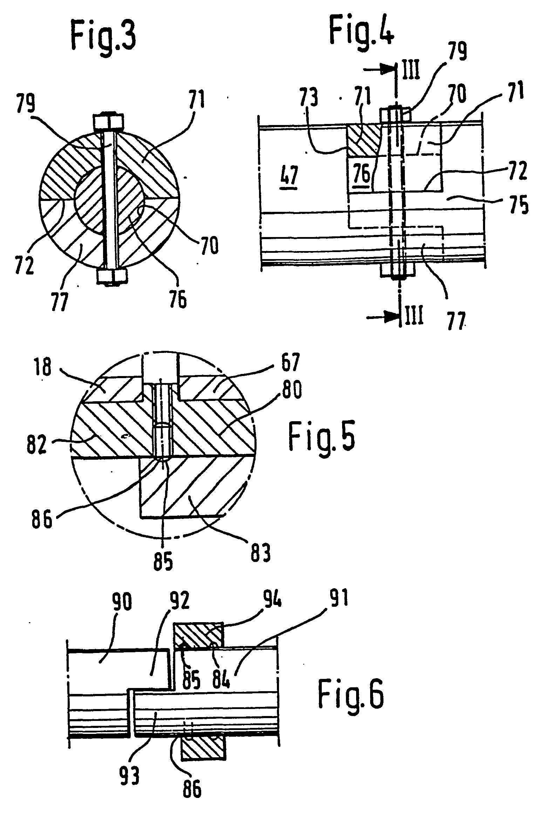

In den Fig. 3 und 4 ist die Verbindung der Enden der Lagerwelle 47 des Lagerbockes 19 mit der Trägerwelle 18 dargestellt. Die beiden zu verbindenden Wellenenden bestehen aus einem Vollmaterial. In das Ende der Lagerwelle 47 ist eine zur Lagerwellenachse koaxiale Sackbohrung 70 gebohrt. Anschließend ist von diesem Ende der Lagerwelle 47 ein Zylindersegment 71 längs einer Diametralebene 72 und einer mit dem Boden der Sackbohrung 70 fluchtenden Radialebene herausgeschnitten.

Die Trägerwelle 18 ist für die Verbindung mit der Lagerwelle 47 mit einem Anschlußstück 74 eus Vollmaterial varbunden, das den Hohlraum der Trägerwelle 18 an diesem Ende verschließt. Dieses Anschlußstück 74 weist einen zur Trägerwelle koaxialen Wellenstumpf 75 auf, der an seinem Ende mit einem Zapfen 76 versehen ist, der im wesentlichen die gleiche Länge und den gleichen Durchmesser wie die Sackbohrung 70 aufweist.

In der in Fig. 3 dargestellten Drehstellung bildet das verbliebene Zylindersegment 77 der Lagerwelle 47 eine nach oben offene Lagerschale für den Zapfen 76 der Trägerwelle 18, so daß dieser Zapfen von oben in die Schale eingesetzt werden kann. Setzt man anschließend das herausgeschnittene Zylindersegment 71 wieder ein und verbindet es mit dem Zapfen 76 und dem verbliebenen Zylindersegment 77 mittels einer Schraube 79, dann erhält man dadurch eine sehr leicht lösbare und einwandfreie drehfeste Verbindung zwischen den beiden Wellenenden.

Eine ähnliche Verbindung ist zwischen dem hohlen Ende der Trägerwelle 18 und dem hohlen Ende der Lagerwelle 67 vorgesehen. Zu diesem Zweck ist das betreffende Ende der Lagerwelle 67 mit einem koaxialen Rohrstutzen 80 verbunden, aus dessen freiem Ende, ebenso wie aus dem Ende der Lagerwelle 47, ein Zylindersegment 81 herausgeschnitten ist, so daß das verbliebene Zylindersegment 82 in der in Fig. 1 dargestellten Drehstellung der Lagerwelle 67 eine nach oben offene Mulde bildet.

Auf dem Rohrstutzen 80 ist eine Deckhülse 83 verschiebbar gelagert, die zwei umlaufende Innennuten 84 und 85 für eine gefederte Rastkugel 86 aufweist. Die Rastkugel ist im Rohrstutzen 80 so angeordnet, daß die Deckhülse 83 in ihrer Freigabestellung (Fig. 5) so gehalten ist, daß der Zylindersegmentausschnitt offen ist und die Trägerwelle 18 von oben in die durch das verbliebene Zylindersegment 82 gebildete Mulde eingesetzt werden kann. Wird dann das ausgeschnittene Zylindersegment 81 in den Zylindersegmentsusschnitt eingelegt und die Deckhülse aus der Freigabestallung in ihre, das Ende der Haltewelle und das verbliebene Zylindersegment umfassende Deckstellung bis zum Einrasten der Rastkugel in die zweite Innennut 84 verschoben (Fig. 1), dann werden die beiden Wellenenden koaxial zusammengehalten. Auf Drehung sind sie nur durch die durch das Gewicht der Trägerwelle verursachte Reibung kreftschlüssig miteinander verbunden. Im vorliegenden Fall ist jedoch eine formschlüssigs Verbindung nicht notwendig, da diese Varbindung lediglich ausreichen soll, um die Trägerwelle zu tragen und eine Absaugung des Zwischenraumes 28 zu ermöglichen.

In Fig. 6 ist noch eine weitere formschlüssige Verbindung zwischen den Enden der Trägerwelle und den benechbarten Enden der Lagerwelle an Hand einer Verbindung dargestellt. Die Zeichnung zeigt die Verbindung von zwei Wellenenden 90 und 91 aua Vollmaterial mit gleichem Durchmesser. Das gleiche gilt für zwei hohle Wellenenden, wenn diese den gleichen Durchmesser haben. In beide zu verbindende Wellenenden 90 und 91 wird, wie oben beschrieben, je ein gleiches Zylindersegment herausgeschnitten. Die Wellen sind so aneinandergefügt, daß die verbliebenen Zylindersegmente 92 bzw. 93 mit ihren ebenen Diametrelflächen aneinanderliegen. Eine der Deckhülse 83 entsprechende Deckhülse 94 ist mit einer Rastkugel arretierbar aus einer Freigabestellung (Fig. 6) auf dem Wellenende 91 in eine Deckstellung verschiebbar, in der sie die beiden Wellenenden koaxial miteinander verbindet, so daß diese infolge der Anlage der beiden Diametralebenen aneinander formschlüssig miteinander verbunden sind.

Mit dar dargestallten Vorrichtung können Einschnitte in die Halbschalan 11 und 12 mittels des Lasers 13 dadurch hergestellt werden, daß die Positionen des Lasers auf seiner Bahn und die Winkelstellungen der Trägerwelle 18 und damit der Schalen 11 durch die inkrementalen Positionsmeßeinrichtungen, nämlich die inkrementale Längenmeßeinrichtung 20 und die inkrementale Winkelmeßeinrichtung 54, gemessen und die gemessenen Werte in den Rechner 55 eingegeben werden, der nach einem Programm die Steuerung der Motoren 16 bzw. 59 zum Herstellen von Einschnitten mit einem vorbestimmten Verlauf miteinander koordiniert.

Da mit den bakannten Lasern 13 eine Tastvorrichtung verbunden ist, die die zu bearbeitende Oberfläche abtastet und dafür sorgt, daß der Laser immer den gleichen Abstand von der Oberfläche hat, können mit der beschriebenen und dargestellten Vorrichtung nicht nur kreiszylindrische Oberflächen, sondern auch unregelmäßige Oberflächen, insbesondere Rotationsflächen bearbeitet werden, die vorschiedene Durchmesser haben, durch die der Abstand von der Laserbahn nicht über die durch die Tastvorrichtung ermöglichte Einstellung des Lasers hinausgeht.

Mittels der Zylinder 34 und 35 kann die dargestellte Vorrichtung nicht nur für durch die Rastaussparungen 42 bestimmte Durchmesser der Rotationsflächen eingestellt werden, sondern auch für Zwischenwerte. Die Raateinrichtung dient vor allem dazu, daß, wenn durch ein plötzliches Ereignis der Druck des Druckmittels im Zylinder nachgeben sollte, die Lagerböcke 19 und 21 nicht um den ganzen Hub des Zylinders herunterstürzen, sondern durch die Resteinrichtung durch den Eingriff in die nächste Rastausspsarung 42 abgefangen werden.

Dadurch, daß die Kraft des Magneten nur dazu ausreicht, den Riegel 43 in der entriegelten Stellung zu halten und nicht aus der Riegelstellung herauszuheben, wird ein Unfall durch ein unsachgemäßes Betätigen des Elektromagneten vermieden.

**Patentansprüche**

1. Vorrichtung zum Bearbeiten eines Körpers (11, 12) mit kreiszylindrischer Außenfläche mittels eines Lasers (13),
   mit zwei Lagerböcken (19, 21) für die drehbare Lagerung einer Trägerwelle (18),
   mit Lagermitteln (22, 23) zum koaxialen Lagern des Körpers auf der Trägerwelle (18),
   mit einer zur Trägerwelle (18) parallelen, geraden Führung (14) für den Laser,
   mit einem Linearantrieb (16) für den Laser, par mit einem Drehantrieb (59) für die Trägerwelle (18) und
   mit einer Steuerung für den synchronisierten Antrieb des Lasers und der Trägerwelle,
   dadurch gekennzeichnet,
   daß in jedem Lagerbock (19, 21) eine Lagerwelle (47, 67) drehbar gelagert ist,
   daß die Enden der Trägerwelle (18) mit den einander zugekehrten Enden der Lagerwellen (47, 67) koaxial verbindbar sind,
   daß die eine Lagerwelle (47) mit dem Drehantrieb (59) verbunden ist und
   daß als Steuerung eine inkrementale Längenmeßeinrichtung (20) für die Bewegung des Lasers (13), eine inkrementale Winkelmeßeinrichtung (54) für die Drehbewegung der Trägerwelle und ein Rechner (55) vorhanden sind, der den Linearantrieb (16) und den Drehantrieb (59) in Abhängigkeit von Meßwerten der Längen- und Winkelmeßeinrichtungen steuert.

2. Vorrichtung nach Anspruch 1, dadurch gekennzeichnet, daß für das Einstellen varschiedener Abstände der Trägerwelle (18) von der Laserführung (14) die Lagerböcke (19, 21) in einer Stellrichtung aufund abbewegbar gelagert sind und daß für diese Bewegung ein Antrieb (34, 35) vorhanden ist.

3. Vorrichtung nach Anspruch 2, dadurch gekennzeichnet, daß für jeden Lagerbock (19, 21) eine Rasteinrichtung (42, 43) vorhanden ist, mittels deren die Lagerböcke (19, 21) in ausgewählten Stellungen arretierbar sind.

4. Vorrichtung nach Anspruch 3, dadurch gekennzeichnet, daß jeder Lagerbock (19, 21) mit einem Ring (46) verbunden ist, dessen Achse parallel zur Stellrichtung ist und der einen Riegel (43) trägt, der radial zum Ring (46) aus einer Riegelstellung, bei der der Riegel (43) in eine Rastaussparung (42) eines Rastenträgers (39) eingreift, gegen die Kraft einer Feder (44) in eine Entriegelungsstellung bewegbar ist, bei der der Riegel (43) aus der Rastaussparung herausgezogen ist und in der er mittels eines Elektromagneten (45) gehalten werden kann.

5. Vorrichtung nach Anspruch 4, dadurch gekennzeichnet, deß als Rastenträger eine zum Ring (46) koaxiale Rastensäule (39) vorgesehen ist.

6. Vorrichtung nach einem der Ansprüche 1 bis 5, dadurch gekennzeichnet, daß zur Bildung von Lagerflächen für die Enden der Trägerwelle (18) in den Enden der Lagerwellen (47, 67) längs einer zur Wellenachse parallelen Fläche, vorzugsweise längs einer Diametralebene (72), und entlang einer mit dieser einen Winkel bildenden Fläche, vorzugsweise längs einer Radielebene (73), Zylindersegmente (71) ausgeschnitten sind, so daß das verbleibende Zylindersegment (77) die Lagerfläche bildet.

7. Vorrichtung nach Anspruch 6, dadurch gekennzeichnet, daß die beiden vorzugsweise am Antriebsende der Trägerwelle (18) miteinander zu verbindenden Wellenenden aus Vollmateriel bestehen, daß im Wellenende der Lagerwelle (47) eine zur Lagerwellenachse koaxiale Sackbohrung (70) angeordnet ist, so daß das verbliebene Zylindersegment (77) eine zur Diametralebene offene Lagerschale bildet, und daß am benachbarten Ende der Trägerwelle (18) für den Eingriff in die Lagerschale ein zur Achse der Trägerwelle koaxialer Zapfen (76) vorhanden ist, dessen Durchmesser gleich dem Durchmesser der Sackbohrung (70) ist.

8. Vorrichtung nach Anspruch 7, dadurch gekennzeichnet, daß zum Übertragen des Drehmomentes der Zapfen (76) und das verbliebene Zylindersegment (77) mittels eines Mitnehmerstiftes (79) miteinander verbunden sind.

9. Vorrichtung nach Anspruch 8, dadurch gekennzeichnet, daß das ausgesparte Zylindersegment (71) die Aussparung ausfüllt und mittels des Mitnehmerstiftes (79) mit den Wellenenden verbunden ist.

10. Vorrichtung nach Anspruch 6, dadurch gekennzeichnet, daß die beiden mindestens an einem Ende der Trägerwelle (18) miteinander zu verbindenden Wellenenden hohl sind, daß der Innendurchmesser des Lagerwellenendes (80) gleich dem Außendurchmesser des Trägerwellenendes ist, so daß das verbleibende Zylindersegment (82) der Lagerwelle (67) eine Lagerschale für das Trägerwellenende bildet und daß das ausgesparte Zylindersegment (8l) die Aussparung ausfüllt und in der Aussparung durch eine axial verschiebbare und feststellbare Deckhülse (83) gehalten ist.

11. Vorrichtung nach Anspruch 6, dadurch gekennzeichnet, daß das Lagerwellenende (91) und das mit ihm zu verbindende Trägerwellenende (90) gleiche Außendurchmesser haben und an dem Trägerwellenende (90) das gleiche Zylindersegment ausgespart ist, so daß jedes verbleibende Zylindersegment (92, 93) des einen Wellenendes in die Zylindersegmentaussparung des anderen Wellenendes eingreift.

12. Vorrichtung nach Anspruch 11, dadurch gekennzeichnet, daß auf mindestens einem Wellenende (80, 91) eine Deckhülse (83, 94) angeordnet ist, die aus einer Freigabestellung auf dem Wellenende (80, 91) in eine die beiden aneinanderstoßenden Wellenenden umfassende Deckstellung und zurück axial verschiebbar ist.

13. Vorrichtung nach einem der Ansprüche 10 bis 12, dadurch gekennzeichnet, daß die Deckhülse (83, 94) zwei umlaufende Innennuten (84, 85) für den Eingriff einer gefederten Rast (86) aufweist, die in dem Wellenende (80, 91) angeordnet ist, das die Deckhülse (83, 94) in ihrer Freigabestellung trägt, und mittels deren die Deckhülse in ihren beiden Stellungen lösbar feststellbar ist.

14. Vorrichtung nach einem der Ansprüche 1 bis 13, dadurch gekennzeichnet, daß als Lagermittel zum Lagern des schalenförmigen Körpers auf der Trägerwelle (18) zwei Lagerräder (22, 23) vorgesehen sind.

15. Vorrichtung nach Anspruch 14, dadurch gekennzeichnet, daß mindestens das eine Lagerrad (23) auf der Trägerwelle (18) axial verschiebbar und feststellbar gelagert ist.

16. Vorrichtung nach Anspruch 14 oder 15, dadurch gekennzeichnet, daß zwischen den Lagerrädern (22, 23) mindestens ein weiteres Lager (27) für die Lagerung des schalenförmigen Körpers (11, 12) vorhanden ist, das vorzugsweise durch radiale Sprossen (27) gebildet ist.

17. Vorrichtung nach einem der Ansprüche 1 bis 16, dadurch gekennzeichnet, daß die Trägerwelle (18) mindestens an ihrem Abtriebsende und die mit diesem verbundene Lagerwelle (67) hohl sind und daß der Hohlraum (33) der Trägerwelle (18) durch radiale Öffnungen (32) mit dem Außenraum verbunden ist.

18. Vorrichtung nach Anspruch 17, dadurch gekennzeichnet, daß das verschiebbare Lagerrad (23) zum Verschließen der radialen Öffnungen (32), die sich auf der dem anderen Lagerrad (22) abgekehrten Seite der Trägerwelle (18) befinden, mit einem die Trägerwelle umfassenden Faltenbalg (30) verbunden ist.

19. Vorrichtung nach Anspruch 17 oder 18, dadurch gekennzeichnet, daß die Hohlräume (33, 63) der Trägerwelle (18) und der Lagerwelle (67) mit einer Absaugvorrichtung verbunden sind.

## Revendications

1. Dispositif destiné au traitement d'un corps (11, 12) à surface cylindrique à l'aide d'un laser (13), comportant
   deux paliers (19, 21) destinés au logement à rotation d'un arbre de support (18),
   des moyens de logement (22, 23) pour le logement coaxial du corps sur l'arbre de support (18),
   un guidage rectiligne (14), parallèle à l'arbre de support (18), pour le laser,
   un entraînement linéaire (16) pour le laser,
   un entraînement à rotation (59) pour l'arbre de support (18) et
   une commande pour l'entraînement synchronisé du laser et de l'arbre de support, caractérisé
   en ce qu'un arbre de palier (47, 67) est logé à rotation dans chaque palier (19, 21),
   en ce que les extrémités de l'arbre de support (18) peuvent être reliées coaxialement avec les extrémités tournées l'une vers l'autre des arbres de palier (47, 67),
   en ce que le premier arbre de palier (47) est relié à l'entraînement à rotation (59) et
   en ce que l'on dispose, comme commande, d'un dispositif de mesure incrémental de longueur (20) pour le déplacement du laser (13), d'un dispositif de mesure incrémental d'angle (54) pour le déplacement à rotation de l'arbre de support et d'un calculateur (55), qui commande l'entraînement linéaire (16) et l'entraînement à rotation (59) en fonction des valeurs de mesure des dispositifs de mesure de longueur et d'angle.

2. Dispositif selon la revendication 1, caractérisé en ce que, les paliers (19, 21) sont logés dans une position de réglage, mobile en rapprochement ou en écartement, pour le réglage de diverses distances de l'arbre de support (18) par rapport au guidage de laser (14), et en ce qu'un entraînement (34, 35) est disponible pour ce déplacement.

3. Dispositif selon la revendication 2, caractérisé en ce que, pour chaque palier (19, 21) est disponible un dispositif d'encliquetage (42, 43), au moyen duquel les paliers (19, 21) peuvent être bloqués dans des positions choisies.

4. Dispositif selon la revendication 3, caractérisée en ce que chaque palier (19, 21) est relié à un anneau (46) dont l'axe est parallèle à la direction de réglage et qui porte un verrou (43), qui est mobile, radialement à l'anneau (46), à partir d'une position de verrouillage, dans laquelle le verrou (43) pénètre dans un évidement d'encliquetage (42) d'un support de cliquet (39), en opposition à la force d'un ressort (44), vers une position de déverrouillage, dans laquelle le verrou (43) est retiré hors de l'évidement d'encliquetage et dans laquelle il peut être maintenu au moyen d'un électroaimant (45).

5. Dispositif selon la revendication 4, caractérisé en ce qu'une colonne d'encliquetage (39) coaxiale à l'anneau (46) est prévue comme support de cliquet.

6. Dispositif selon l'une des revendications 1 à 5, caractérisé en ce que des segments cylindriques (71) sont découpés, d'une manière telle que le segment cylindrique (77) constitue la surface de palier, le long d'une surface parallèle à l'axe d'arbre, de préférence le long d'un plan diamétral (72) et le long d'une surface constituant avec celle-ci un angle, de préférence le long d'un plan radial (73), afin de constituer des surfaces de palier des extrémités de l'arbre de support (18) dans les extrémités des arbres de palier (47, 67).

7. Dispositif selon la revendication 6, caractérisé en ce que les deux extrémités d'arbre, de préférence à relier à l'extrémité d'entraînement de l'arbre de support (18), sont en matière massive, en ce qu'un alésage borgne (70) coaxial à l'axe d'arbre de palier est disposé dans l'extrémité d'arbre de l'arbre de palier (47), de sorte que le segment de cylindre résiduel (77) constitue une coquille de palier ouverte au plan diamétral, et en ce que, sur l'extrémité voisine de l'arbre de support (18), il existe un tenon (76) coaxial à l'axe de l'arbre de support pour pénétrer dans la coquille de palier, le diamètre du tenon étant égal au diamètre de l'alésage borgne (70).

8. Dispositif selon la revendication 7, caractérisé en ce que, pour le transfert du moment de rotation, le tenon (76) et le segment cylindrique résiduel (77) sont reliés l'un à l'autre au moyen d'une tige d'entraînement (79).

9. Dispositif selon la revendication 8, caractérisé en ce que le segment cylindrique (76) est vidé, remplit un évidement et est relié au moyen de la tige d'entraînement (79) aux extrémités d'arbre.

10. Dispositif selon la revendication 6, caractérisé en ce que les deux extrémités d'arbre, à relier l'une à l'autre au moins à une extrémité de l'arbre de support (18), sont creuses, en ce que le diamètre intérieur de l'extrémité d'arbre de palier (80) est égal au diamètre extérieur de l'extrémité d'arbre de support, de sorte que le segment cylindrique résiduel (82) de l'arbre de palier (67) constitue une coquille de palier pour l'extrémité d'arbre de support, et que le segment cylindrique est vidé (81), remplit l'évidement et est maintenu dans l'évidement par une douille de recouvrement (83) mobile axialement dans l'évidement et susceptible d'être fixée.

11. Dispositif selon la revendication 6, caractérisé en ce que l'extrémité d'arbre de palier (91) et l'extrémité d'arbre de support (90) qui doit lui être reliée sont de même diamètre extérieur et que le même segment cylindrique est évidé sur l'extrémité d'arbre de palier (90), de sorte que chaque segment cylindrique restant (92, 93) d'une extrémité d'arbre pénètre dans l'évidement de segment cylindrique de l'autre extrémité d'arbre.

12. Dispositif selon la revendication 11, caractérisé en ce que, sur au moins une extrémité d'arbre (80, 91), est disposée une douille de recouvrement (83, 94), qui est mobile axialement en va-et-vient ax partir d'une position de libération sur l'extrémité d'arbre (80, 91), vers une position de recouvrement qui entoure les deux extrémités d'arbre qui s'appuient l'une sur l'autre.

13. Dispositif selon l'une des revendications 10 à 12, caractérisé en ce que la douille de recouvrement (83, 94) présente deux nervures intérieures périphériques (84, 85) pour la pénétration d'un cliquet à ressort (86), qui est disposé dans l'extrémité d'arbre (80, 91) qui porte la douille de recouvrement (83, 94) dans sa position de libération, et au moyen duquel la douille de recouvrement peut être fixée de façon détachable dans l'une de ces deux positions.

14. Dispositif selon l'une des revendications 1 à 13, caractérisé en ce que deux roues de palier (22, 23) sont prévues comme moyen de palier pour loger le corps en forme de coquille sur l'argre de support (18).

15. Dispositif selon la revendication 14, caractérisé en ce qu'au moins une roue de palier (23) est logée en étant axialement mobile sur l'arbre de support (18) et en pouvant être fixée.

16. Dispositif selon la revendication 14 ou 15, caractérisé en ce que, entre les roues de palier (22, 23), au moins un autre palier (27) est prévu pour le logement du corps en forme de coquille (11, 12) qui est de préférence constitué de barreaux radiaux (27).

17. Dispositif selon l'une des revendications 1 à 16, caractérisé en ce que l'arbre de support (18), au moins à son extrémité d'entraînement, et l'arbre de logement (67) qui lui est relié sont creux, et en ce que l'espace creux (33) de l'arbre de support (18) est relié à l'espace extérieur par des orifices radiaux (32).

18. Dispositif selon la revendication 17, caractérisé en ce que la roue de palier mobile (23) est reliée, pour fermer les ouvertures radiales (32) qui se trouvent sur le côté de l'arbre de support (18) opposé à la roue d'entraînement (22), à un soufflet (30) entourant l'arbre de support.

19. Dispositif selon la revendication 17 ou 18, caractérisé en ce que les espaces creux (33, 63) de l'arbre de support (18) et de l'arbre de palier (67) sont reliés à un dispositif d'aspiration.

**Claims**

1. An apparatus for machining a body (11, 12) having a circularly cylindrical outer surface, by means of a laser (13),
with two bearing blocks (19, 21) for rotatably mounting of a carrier shaft (18),
with bearing means (22, 23) for the coaxial mounting of the body on the carrier shaft (18),
with, parallel with the carrier shaft (18), a straight guide (14) for the laser,
with a linear drive (16) for the laser,
with a rotary drive (59) for the carrier shaft (18) and,

with a control for the synchronised drive of the laser and of the carrier shaft,
characterised in that
a bearing shaft (47, 67) is rotatably mounted in each bearing block (19, 21),
and in that the ends of the carrier shaft (18) can be coaxially connected to the mutually facing ends of the bearing shafts (47, 67),
and in that one bearing shaft (47) is connected to the rotary drive (59), and
in that as a control arrangement, there are provided an incremental length measuring device (20) for the movement of the laser (13), an incremental angle measuring device (54) for the rotary movement of the carrier shaft and a computer (55) which controls the linear drive (16) and the rotary drive (59) as a function of values measured by the length and angle measuring devices.

2. An apparatus according to claim 1, characterised in that for adjusting various distances between the carrier shaft (18) and the laser guide (14) the bearing blocks (19, 21) are mounted to be movable upwards and downwards in a positioning direction and in that a drive (34, 35) is provided for this movement.

3. An apparatus according to claim 2, characterised in that for each bearing block (19, 21) a ratchet device (42, 43) is provided by means of which the bearing blocks (19, 21) can be arrested in the selected positions.

4. An apparatus according to claim 3, characterised in that each bearing block (19, 21) is connected to a ring (46), the axis of which is parallel with the positioning direction and which carries a locking member (43) which is adapted for movement radially of the ring (46) and out of a locked position in which the locking member (43) engages a recess (42) in a ratchet carrier (39) and into an unlocked position against the force of a spring (44) and in which the locking member (43) is withdrawn from the locking recess and can be maintained in that position by means of an electromagnet (45).

5. An apparatus according to claim 4, characterised in that a ratchet column (39) coaxial with the ring (46) is provided as a ratchet carrier.

6. An apparatus according to one of claims 1 to 5, characterised in that in order to form bearing surfaces for the ends of the carrier shaft (18), cylinder segments (71) are cut out of the ends of the bearing shafts (47, 67) lengthwise of a surface parallel with the shaft axis, preferably lengthwise of a diametral plane (72), and along a surface forming an angle thereto, preferably lengthwise of a radial plane (73), so that the remaining cylinder segment (77) forms the bearing surface.

7. An apparatus according to claim 6, characterised in that the two shaft ends which are to be connected to each other preferably at the drive end of the carrier shaft (18) consist of solid material and in that a blind bore (70) coaxial with the bearing shaft axis is disposed in the shaft end of the bearing shaft (47) so that the remaining cylinder segment (77) forms a bearing shell which is open towards the diametral plane and in that there is on the adjacent end of the carrier shaft (18) for engagement into the bearing shell a journal (76) coaxial with the axis of the bearing shaft and the diameter of which is equal to the diameter of the blind bore (70).

8. An apparatus according to claim 7, characterised in that to transmit the torque the journal (76) and the remaining cylinder segment (77) are connected to each other by a drive pin (79).

9. An apparatus according to claim 8, characterised in that the recessed cylinder segment (71) fills the recess and is connected to the shaft ends by means of the drive pin (79).

10. An apparatus according to claim 6, characterised in that the two shaft ends which are to be connected to each other at least at one end of the carrier shaft (18) are hollow and in that the inside diameter of the bearing shaft end (80) is equal to the outside diameter of the carrier shaft end so that the remaining cylinder segment (82) of the bearing shaft (67) forms a bearing shell for the carrier shaft end and in that the recessed cylinder segment (81) fills the recess and is held in the recess by an axially displaceable and lockable covering sleeve (83).

11. An apparatus according to claim 6, characterised in that the bearing shaft end (91) and the carrier shaft end (90) which is to be connected to it are of the same outside diameter and in that the same cylinder segment is recessed on the carrier shaft end (90) so that each remaining cylinder segment (92, 93) on one shaft end engages the cylinder segment recess on the other shaft end.

12. An apparatus according to claim 11, characterised in that on at least one shaft end (80, 91) there is a cover sleeve (83, 94) which is axially displaceable out of a released position on the shaft end (80, 91) into a covering position enclosing the two abutting shaft ends and back.

13. An apparatus according to one of claims 10 to 12, characterised in that the cover sleeve (83, 94) has two encircling inner grooves (84, 85) for the engagement of a spring loaded catch (86) disposed in the shaft end (80, 91) which carries the cover sleeve (83, 94) in its released position and by means of which the cover sleeve is separably lockable in both its positions.

14. An apparatus according to one of claims 1 to 13, characterised in that as a bearing means for mounting the shell-like body on the carrier shaft (18), two bearing wheels (22, 23) are provided.

15. An apparatus according to claim 14, characterised in that at least one bearing wheel (23) is mounted for axial displacement and in lockable fashion on the carrier shaft (18).

16. An apparatus according to claim 14 or 15, characterised in that between the bearing wheels (22, 23) there is at least one further bearing (27) for mounting of the shell-like body (11, 12) which preferably consists of radial bars (27).

17. An apparatus according to one of claims 1 to 16, characterised in that the carrier shaft (18) is hollow at least at its output end and the bearing shaft (67) which is connected to it is hollow and in that the cavity (33) in the carrier shaft (18) is connected to the outer space by radial apertures (32).

18. An apparatus according to claim 17, characterised in that for closing the radial apertures (32) which are disposed on the side of the carrier shaft (18) which is remote from the bearing wheel (22), the other displaceable bearing wheel (23) is connected to a bellows (30) which encloses the carrier shaft.

19. An apparatus according to claim 17 or 18, characterised in that the cavities (33, 63) in the carrier shaft (18) and the bearing shaft (67) are connected to a vacuum extraction device.

Fig.1

# Fig.2

## Fig.3

## Fig.4

## Fig.5

## Fig.6